Europäisches Patentamt

European Patent Office

Office européen des brevets

(11) Veröffentlichungsnummer: **0 048 289**

**A1**

(12) # EUROPÄISCHE PATENTANMELDUNG

(21) Anmeldenummer: 80105615.1

(22) Anmeldetag: 19.09.80

(51) Int. Cl.³: **G 11 B 5/38**
    **G 11 B 5/30**

(43) Veröffentlichungstag der Anmeldung:
    31.03.82 Patentblatt 82/13

(84) Benannte Vertragsstaaten:
    DE FR GB IT

(71) Anmelder: IBM DEUTSCHLAND GMBH
    Pascalstrasse 100
    D-7000 Stuttgart 80(DE)

(84) Benannte Vertragsstaaten:
    DE

(71) Anmelder: International Business Machines
    Corporation

    Armonk, N.Y. 10504(US)

(84) Benannte Vertragsstaaten:
    FR GB IT

(72) Erfinder: Brunsch, Arwed, Dr.
    Am Bopserweg 8
    D-7000 Stuttgart 1(DE)

(72) Erfinder: Ruh, Wolf-Dieter
    Sommerhofenstrasse 152/1
    D-7032 Sindelfingen 1(DE)

(72) Erfinder: Trippel, Gerhard, Dr.
    Steinenbronner Strasse 15
    D-7032 Sindelfingen(DE)

(74) Vertreter: Herzog, Joachim, Dipl.-Ing
    Schönaicher Strasse 220
    D-7030 Böblingen(DE)

(54) Magnetoresistiver Dünnfilm-Abtastkopf mit Unterdrückung thermisch induzierter Spannungsspitzen.

(57) Bei einem magnetoresistiven Dünnfilm-Abtastkopf, der neben der magnetoresistiven Abtastschicht (1) eine elektrisch leitende Nebenschlußschicht (2) enthält, ist letztere aus einem Material mit negativem Temperaturkoeffizienten gefertigt. Durch geeignete Dimensionierung der Dicken der Schichten sowie geeignete Auswahl der Materialien kann die Temperaturänderung des Widerstandes der magnetoresistiven Schicht auf Null kompensiert werden. Dadurch werden Störspannungsspitzen im Ausgangssignal des magnetoresistiven Abtastkopfes, die durch Reibungswärme zwischen dem Aufzeichnungsträger und dem Abtastkopf thermisch induziert werden, vermieden oder zumindest auf ein Minimum reduziert.

EP 0 048 289 A1

- 1 -

Magnetoresistiver Dünnfilm-Abtastkopf mit Unterdrückung
thermisch induzierter Spannungsspitzen

Die Erfindung betrifft einen magnetoresistiven Dünnfilm-
Abtastkopf mit Unterdrückung thermisch induzierter Spannungsspitzen, wobei neben der der Abtastung magnetischer
Felder dienenden magnetoresistiven Abtastschicht eine elektrisch leitende Nebenschlußschicht vorgesehen ist.

Magnetoresistive Abtastköpfe dienen der Abtastung magnetischer Felder und weisen den besonderen Vorteil auf, daß
die von ihm abgegebenen Signale unabhängig von der relativen
Geschwindigkeit zwischen dem Abtastkopf und dem magnetischen
Aufzeichnungsmedium sind.

Es tritt nun in der Praxis immer wieder das Problem auf,
insbesondere bei der gewünschten engen Beabstandung zwischen Kopf und sich bewegenden magnetischen Aufzeichnungsträger, wie beispielsweise Platte oder Band, daß eine Berührung zwischen dem magnetoresistiven Abtastkopf mit seiner Abtastschicht und dem magnetischen Aufzeichnungsträger
stattfindet. Diese Berührung kann direkt sein oder sie kann
durch zwischen Abtastkopf und sich bewegendem magnetischen
Aufzeichnungsträger befindlichen Störpartikeln wie z.B.
Staubpartikel hervorgerufen werden. Durch diese Berührung
entsteht Reibungswärme, die eine kurzzeitige erhebliche Erwärmung der magnetoresistiven Abtastschicht bedeutet. Da
das Lesesignal des magnetoresistiven Abtastkopfes von der
Widerstandsänderung in seiner Abtastschicht abhängig ist,
wobei diese Widerstandsänderung durch den Einfluß des magnetischen Feldes bewirkt wird, ist eine thermisch durch die

GE 980 031

Reibungswärme induzierte Widerstandsänderung sehr nachteilig in Bezug auf das Lesesignal. Es können durch solche thermisch induzierte Signale Lesesignale vorgetäuscht werden.

Es ist ein magnetoresistiver Dünnfilm-Abtastkopf gemäß dem Oberbegriff des Patentanspruchs 1 aus der Deutschen Offenlegungsschrift 26 50 484 bekannt, bei dem neben der zum Abtasten magnetischer Felder, insbesondere magnetischer Datenaufzeichnungen, vorgesehenen magnetoresistiven Abtastschicht eine in direktem engen physikalischem und elektrisch leitendem Kontakt stehende elektrisch leitende Nebenschlußschicht vorgesehen ist. Diese elektrisch leitende Nebenschlußschicht dient dazu, neben dem Strompfad durch die magnetoresistive Abtastschicht einen weiteren Strompfad zu haben, der im Falle von Defekten oder Rissen in der dünnen magnetoresistiven Schicht dazu dient, den Strom durch die Anordnung von einem Ende zum anderen Ende hindurch durchzuleiten. Die magnetoresistive Abtastschicht dieser bekannten Anordnung reicht bis in den sogenannten Kopfspiegel der Anordnung hinein, sodaß sie möglichst nahe den magnetischen Feldern kommt, die aus dem magnetischen Aufzeichnungsträger austreten. Dies setzt allerdings auf der anderen Seite die magnetoresistive Abtastschicht der Gefahr der Berührung mit dem Aufzeichnungsträger bei Relativbewegung sowie der Berührung mit Staubpartikeln oder störenden Fremdkörpern aus, sodaß sie eine Erwärmung bei Reibung ausgesetzt ist. Aufgrund der Erwärmung ändert sich in der magnetoresistiven Abtastschicht der Widerstand, sodaß es im Lesesignal zu nicht von zu lesenden Datenaufzeichnungen zu unterscheidenden Signalen kommen kann. Es können also falsche Lesesignale vorgetäuscht werden.

GE 980 031

Aus einem Artikel mit dem Titel "Analysis of Thermal Noise Spike Cancellation" von R.D. Hempstead, erschienen in den IEEE Transactions on Magnetics, Vol. MAG-11, No.5, September 1975, Seiten 1224 bis 1226, ist eine magnetoresistive Abtastkopf-Konfiguration bekannt, die zum Unterdrücken von thermisch induzierten Störungen im Ausgangssignal dient. Diese thermisch induzierten Störungen gehen zurück auf die Reibungswärme, die bei Berührung zwischen dem Kopf und dem magnetischen Aufzeichnungsträger bzw. dazwischenliegenden Störkörpern entstehen.

Der aus dem genannten Artikel bekannte magnetoresistive Abtastkopf enthält einen zweiten magnetoresistiven Abtaststreifen, welcher auf dem Substrat angeordnet ist, allerdings von der Kopfspiegelfläche entfernt hinter dem ersten magnetoresistiven Abtaststreifen. An einem Ende sind die beiden Streifen miteinander verbunden am anderen Ende sind sie getrennt auf Differenzverstärker geführt, um unter anderem dadurch thermisch induzierte Störsignale zu eliminieren. Diese bekannte Anordnung arbeitet nur einigermaßen zufriedenstellend bei relativ niedriger Geschwindigkeit zwischen Kopf und Aufzeichnungsträger bzw. bei niedriger Frequenz und ist darüberhinaus von der Wärmeleitfähigkeit des Substrats bzw. des Deckmaterials wesentlich abhängig. Ist diese gut, dann wird auch der vom Kopfspiegel entfernt liegende magnetoresistive Abtaststreifen, wenn auch verzögert, so doch etwas erwärmt. Es ist jedoch klar, daß durch diese Konstruktion keineswegs eine vollständige Eliminierung thermisch induzierter Störungen erreichbar ist, da die beiden Streifen aufgrund ihrer örtlichen Distanz unterschiedlichen Bedingungen unterliegen.

Hier will die Erfindung Abhilfe schaffen. Die Erfindung, wie sie in den Ansprüchen gekennzeichnet ist, löst die Aufgabe, einen magnetoresistiven Dünnfilm-Abtastkopf zu

GE 980 031

schaffen, der zuverlässig und in einfacher Weise thermisch induzierte Störspannungen im Lesesignal nicht aufscheinen läßt oder sie zumindest auf ein Minimum reduziert und der einfach aufgebaut ist.

Die durch die Erfindung erreichten Vorteile sind im wesentlichen darin zu sehen, daß thermisch induzierte Störspannungsspitzen im Lesesignal nicht oder nur minimal auftreten. Die Kompensation des Anstiegs des elektrischen Widerstandes in der magnetoresistiven Abtastschicht durch den Abfall des elektrischen Widerstands in der Nebenschlußschicht sorgt dafür. Sie ist deshalb weitgehend zuverlässig, weil die Reibungswärme, die bei Berührung des Abtastkopfes mit dem magnetischen Aufzeichnungsträger oder mit einem dazwischenliegendem Fremdkörper auftritt, auf beide Schichten gleichermaßen einwirkt. Weiterhin sind keine besonderen baulichen oder schaltungsmäßigen Maßnahmen für den Abtastkopf gemäß der Erfindung nötig, sodaß er sich durch einen einfachen Aufbau bei einfacher Auswertung auszeichnet. Die Unterdrückung thermisch induzierter Störspannungsspitzen ist darüber hinaus im wesentlichen frequenzunabhängig und wird von der Wärmeleitfähigkeit des umgebenden Materials, wie beispielsweise dem tragenden Substrat oder den Deckschichten nicht gravierend beeinflußt.

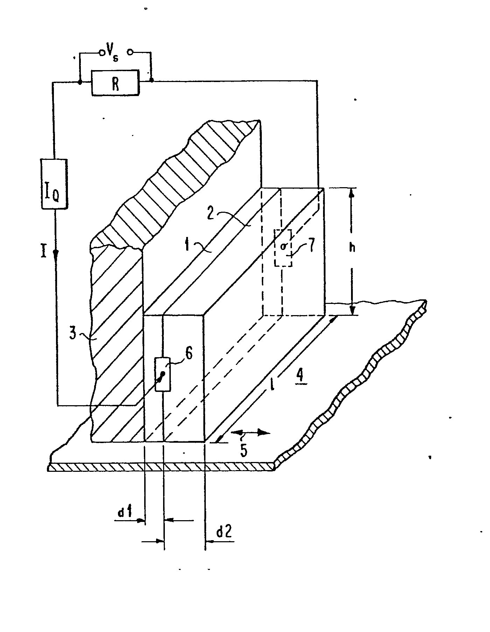

Im folgenden wird die Erfindung anhand der lediglich einen Ausführungsweg darstellenden Zeichnung näher erläutert. Die Figur zeigt schematisch in perspektivischer Darstellung einen magnetoresistiven Dünnfilm-Abtastkopf.

In der Figur ist mit 1 die magnetoresistive Abtastschicht bezeichnet, auf der in gleichen Abmessungen was die Länge l und die Höhe h betrifft, eine elektrisch leitende Nebenschlußschicht 2 aufgebracht ist. Diese Nebenschlußschicht 2 steht in engem physikalischem, elektrisch leitendem und

GE 980 031

wärmeleitenden Kontakt mit der magnetoresistiven Abtastschicht 1. Beide Schichten 1 und 2 zusammen sind auf einem Substrat 3 aufgebracht. Die magnetoresistive Abtastschicht 1 tastet Magnetfelder ab, die von einem magnetischen
Aufzeichnungsträger 4 ausgehen, von dem ein Ausschnitt dargestellt ist, und der in Richtung des Doppelpfeils 5 relativ
zu dem Abtastkopf verschoben werden kann. Von einer Stromquelle $I_Q$ wird ein konstanter Betriebsstrom über einen Anschluß 6 gleichzeitig beiden Schichten 1 und 2 zugeführt.
Der Strom teilt sich in beiden Schichten 1 und 2 entsprechend den Dimensionen und den spezifischen elektrischen Widerständen dieser Schichten auf und tritt aus beiden am
Anschluß 7 heraus. Über einen Widerstand R ist die Signalspannung $V_S$ abzunehmen. Dieser Widerstand R ist einerseits
mit der Stromquelle $I_Q$ und andererseits mit dem Anschluß 7
der Schichten 1 und 2 verbunden. Die Schichten 1 und 2 sind
insbesondere hinsichtlich ihrer Dicken nicht maßstäblich dargestellt und können auch in umgekehrter Reihenfolge auf dem
Substrat 3 angeordnet sein.

Fließt in der magnetoresistiven Abtastschicht 1 ein konstanter Strom, dann ändert sich unter dem Einfluß eines
vom Aufzeichnungsträger 4 ausgehenden Magnetfeldes der Widerstand dieser Schicht. Diese Widerstandsänderung ist als
Spannungsänderung über den Widerstand R als Signalspannung
$V_S$ abgreifbar. Dieser Widerstandsänderung, die erwünscht
ist, ist dann eine weitere unerwünschte Widerstandsänderung
überlagert, wenn eine Berührung zwischen der magnetoresistiven Schicht 1 und dem Aufzeichnungsträger 4 erfolgt und
durch die Reibungswärme eine Widerstandserhöhung der magnetoresistiven Schicht 1 erfolgt.

Erfindungsgemäß ist das Material der Nebenschlußschicht 2
so gewählt, daß es einen negativen Temperaturkoeffizienten
aufweist, der in der Lage ist die Widerstandserhöhung der
magnetoresistiven Abtastschicht 1 zu kompensieren. Ist dies
erreicht, dann tritt keine Störspannung im Signal $V_S$ auf-

GE 980 031

grund thermischer Induktion auf, zumindest kein störendes mehr. Die beiden Schichten 1 und 2 liegen direkt aufeinander und es ist davon auszugehen, daß in den meisten Fällen die Reibungswärme in gleicher Weise auf beide Schichten einwirkt, sodaß die Kompensation der Widerstandserhöhung in der magnetoresistiven Abtastschicht 1 durch die Widerstandserniedrigung in der Nebenschlußschicht 2 sicher ist.

Durch geeignete Wahl der Schichtdicken $d_1$ und $d_2$, des spezifischen Widerstandes $\rho_1$ für die magnetoresistive Abtastschicht 1, des spezifischen Widerstandes $\rho_2$ der Nebenschlußschicht 2 sowie der Temperaturkoeffizienten $\alpha_1$ für die magnetoresistive Abtastschicht 1 sowie $\alpha_2$ der Nebenschlußschicht 2, ist die Konstanthaltung des Widerstandswertes in Abhängigkeit von der Temperatur erreichbar. Es ist möglich die Widerstandsänderung in Abhängigkeit von der Temperatur auf Null zu bringen, wenn ohne Berücksichtigung der Geometrie, d.h. bei gleichen Längenabmessungen l und Höhenabmessungen h für die Schichten 1 und 2 gemäß folgender Gleichung

$$d_1 \, \alpha_1 \, / \, \rho_1 = d_2 \, \alpha_2 \, / \, \rho_2$$

dimensioniert bzw. abgeglichen wird. Im allgemeinen können die Werte folgende sein:

für die Dicke $d_1$ ca. 10 - 60 nm

für die Dicke $d_2$ ca. 0,1 - 4 µm,

der spezifische Widerstand $\rho_1$ der magnetoresistiven Schicht etwa $20 \times 10^{-6}$ Ωcm und der zugehörige Temperaturkoeffizient $\alpha_1$ etwa $2,8 \times 10^{-3}$ $(^{\circ}C)^{-1}$.

Geeignete Materialien mit negativem Temperaturkoeffizienten sind beispielsweise folgende Legierungen mit den entsprechenden Werten:

Konstantan, d.h. eine Legierung aus 54 % Cu, 1 % Mn und 45 % Ni, hat einen spezifischen Widerstand $\rho_2$ von $50 \times 10^{-6}$ Ωcm und einen Temperaturkoeffizienten $\alpha_2$ von $-3 \times 10^{-5}$ $(^{\circ}C)^{-1}$; Novokonstant, eine Legierung aus 82,5 % Cu, 12 % Mn, 4 % Al und 1,5 % Fe, mit einem spezifischen Widerstand $\rho_2$ von

GE 980 031

45 x $10^{-6}$ $\Omega$cm und einem Temperaturkoeffizienten $\alpha_2$ von -4 x $10^{-5}$ $(^{\circ}C)^{-1}$;

eine Legierung aus 88 % Cu, 10 % Mn und 2 % Al mit einem spezifischen Widerstand $\rho_2$ von ca. 38 x $10^{-6}$ $\Omega$cm und einem Temperaturkoeffizienten $\alpha_2$ von -3,65 x $10^{-5}$ $(^{\circ}C)^{-1}$;

eine Legierung, sogenanntes NBW 139 mit 38 Gew.-% Ag, 9 % Sn und 13 % Mn mit einem spezifischen Widerstand $\rho_2$ von 61 x $10^{-6}$ $\Omega$cm und einem Temperaturkoeffizienten $\alpha_2$ von -8 x $10^{-5}$ $(^{\circ}C)^{-1}$

sowie eine Legierung, sogenanntes NBW 173 mit 85 Gew.-% Ag, 3 Gew.-% Sn und 17 Gew.-% Mn, einem spezifischen Widerstand $\rho_2$ von ca. 58 x $10^{-6}$ $\Omega$cm und einem Temperaturkoeffizienten $\alpha_2$ von -10,5 x $10^{-5}$ $(^{\circ}C)^{-1}$ .

Es ist möglich, daß allein durch den Strom in der Nebenschlußschicht 2 die notwendige Vormagnetisierung aufgebracht wird, durch die die magnetoresistive Abtastschicht 1 in den richtigen Arbeitspunkt verbracht wird. Falls die Vormagnetisierung nicht oder nicht vollständig von der Nebenschlußschicht 2 aufgebracht werden soll, so kann eine weitere Schicht vorgesehen werden, die die Vormagnetisierung der magnetoresistiven Abtastschicht 1 bewirkt. Eine solche Schicht ist in der Figur nicht dargestellt.

P A T E N T A N S P R Ü C H E

1. Magnetoresistiver Dünnfilm-Abtastkopf für die Abtastung magnetischer Felder, insbesondere magnetischer Datenaufzeichnungen, mit einer magnetoresistiven Abtastschicht (1) und einer in direktem engen physikalischen und elektrisch leitenden Kontakt stehenden elektrisch leitenden Nebenschlußschicht (2), dadurch gekennzeichnet, daß

a) die Nebenschlußschicht (2) aus einem geeignetem Material mit negativem Temperaturkoeffizienten hergestellt ist,

b) die Nebenschlußschicht (2) in engem thermischen Kontakt mit der magnetoresistiven Abtastschicht (1) angeordnet ist und

c) die Temperaturkoeffizienten ($\alpha_1$, $\alpha_2$), die Schichtdicken ($d_1$, $d_2$) und die spezifischen Widerstände ($\rho_1$, $\rho_2$) der beiden Schichten (1, 2) so aufeinander abstimmbar sind, daß thermisch induzierte Störungen minimierbar sind.

2. Magnetoresistiver Dünnfilm-Abtastkopf nach Anspruch 1, dadurch gekennzeichnet, daß die Abgleichbedingung, bei welcher bei einer Temperaturänderung der beiden Schichten (1, 2) deren elektrische Widerstandsänderung insgesamt gleich Null ist, der Formel

$$d_1 \, \alpha_1 \, / \, \rho_1 = d_2 \, \alpha_2 \, / \, \rho_2$$

folgt, dabei bedeuten

$d_1$, $d_2$, die Dicken der magnetoresistiven Abtastschicht (1) bzw. die Nebenschlußschicht (2),

$\alpha_1$, $\alpha_2$, die Temperaturkoeffizienten der magnetoresistiven Abtastschicht (1) bzw. der Nebenschlußschicht (2) und

$\rho_1$, $\rho_2$ die spezifischen elektrischen Widerstandswerte

GE 980 031

- 9 -

der magnetoresistiven Abtastschicht (1) bzw. der Nebenschlußschicht (2).

3. Magnetoresistiver Dünnfilm-Abtastkopf nach Anspruch 1 oder 2,
dadurch gekennzeichnet, daß
als Materialien mit geeignetem negativem Temperaturkoeffizienten ($\alpha_2$) für die Nebenschlußschicht (2) beispielsweise verwendbar sind Legierungen aus
a) der Gruppe Kupfer-Mangan oder
b) Kupfer-Mangan-Nickel (Konstantan) oder
c) Kupfer-Mangan-Aluminium (Novokonstant) oder
d) Silber mit Zinn und Mangan (NBW 139, NBW 123).

4. Magnetoresistiver Dünnfilm-Abtastkopf,
dadurch gekennzeichnet, daß
die Nebenschlußschicht (2) derartig dimensionierbar und auswählbar ist, daß durch den in ihr fließenden Strom die benötigte Vormagnetisierung für die magnetoresistive Abtastschicht (1) ganz oder teilweise erzeugbar ist.

GE 980 031

| | | |
|---|---|---|

# EUROPÄISCHER RECHERCHENBERICHT

**0048289**

Nummer der Anmeldung

EP 80 10 5615.1

Europäisches Patentamt

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | IBM TECHNICAL DISCLOSURE BULLETIN, Band 18, Nr. 2, Juli 1975 New York C.H. BAJOREK et al. "Negative Temperature Coefficient Material for MR Element Thermal Noise" Seite 540 -- | 1,4 |
| | JOURNAL OF PHYSICS E, Band 8, Nr. 5, Mai 1975, London W.M. MORRIS et al. "Thin Film Thermistors" Seiten 411 bis 414 * Seite 411, Zusammenfassung * -- | 3 |
| A | Patents Abstracts of Japan, Band 1, Nr. 88, 16. August 1977 Seite 2115 E 77 & JP - A - 52 - 23921 -- | |
| D,A | DE - A1 - 2 650 484 (IBM) * Anspruch 1; Seite 4 * ---- | |

### KLASSIFIKATION DER ANMELDUNG (Int. Cl.³)

G 11 B 5/38
G 11 B 5/30

### RECHERCHIERTE SACHGEBIETE (Int. Cl.³)

G 11 B 5/00
H 01 C 7/04

### KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Berlin | 05-05-1981 | LEITHÄUSER |

EPA form 1503.1  06.78